# EUROPEAN PATENT APPLICATION

(11) **EP 4 350 606 A1**
(43) Date of publication of application: **10.04.2024**
(21) Application number: 22810271.1
(22) Date of filing: 22.04.2022
(51) Int. Cl.: G06T 5/50

(54) **MAP REGION MERGING METHOD AND APPARATUS, AUTONOMOUS MOBILE DEVICE AND STORAGE MEDIUM**

(30) Priority: 25.05.2021 CN 202110574289
(71) Applicant: Qfeeltech (Beijing) Co., Ltd., Beijing 100191 (CN)
(72) Inventor: WU, Chenhao, Beijing 100191 (CN)
(74) Representative: Novagraaf International SA
(86) International application number: PCT/CN2022/088378
(87) International publication number: WO 2022/247538

(57) **Abstract**

The present disclosure provides a map zone fusing method, apparatus, an autonomous mobile device and a storage medium. The method includes: obtaining a label map of a target zone, the label map including a plurality of candidate rooms; obtaining crossing borders between the candidate rooms; determining an adjacency relationship between the candidate rooms based on the crossing borders, to determine adjacent rooms; fusing the adjacent rooms when the adjacent rooms satisfy a fusing condition. In the present disclosure, through determining the adjacency relationship between the candidate rooms in the label map, the adjacent rooms that satisfy the fusing condition are fused. Fusion of map zones obtained after division may be realized based on the zone features, such that the post-zone-division map can better and more accurately match the division of the functional zones of the actual target zone, thereby increasing the accuracy of the map zone division.

## Description

This application claims priority to Chinese Patent Application No. 202110574289.8, filed in Chinese Patent Office on May 25, 2021, and titled "Map Zone Fusing Method, Apparatus, Autonomous Mobile Device and Storage Medium," the entire content of which is incorporated herein by reference.

### TECHNICAL FIELD

The present disclosure relates to the technology of data processing, and in particular, to a map zone fusing method, an apparatus, an autonomous mobile device and a storage medium.

### BACKGROUND TECHNOLOGY

As the advance of technology and improvement of living standards, more and more autonomous mobile devices equipped with different functions have entered people's homes, such as cleaning robots, companion type mobile robots, etc., which have made people's life more comfortable and convenient.

An autonomous mobile device is a smart device that autonomously executes predetermined tasks in a predetermined work zone. Currently available autonomous mobile devices typically include, but are not limited to, cleaning robots (e.g., smart floor sweeping robots, smart floor mopping robots, window cleaning robots), companion type mobile robots (e.g., smart electronic pets, nanny robots), service type mobile robots (e.g., receptionist robots in restaurants, hotels, meeting places), industrial inspection smart devices (e.g., electric power line inspection robots, smart forklift, etc.), security robots (e.g., home or commercial use smart bodyguard robots), etc.

An autonomous mobile device typically can autonomously move in a limited space. For example, cleaning robots, companion type mobile robots typically move indoor, service type mobile robots typically move in a specific limited space in a hotel, a meeting place, etc. The limited space may be referred to as a work zone of the autonomous mobile device.

Oftentimes, the work zone of the autonomous mobile device may not be an open space, but rather, may be multiple indoor zones divided by walls, doors, or other separating objects, such as multiple rooms. In certain scene, a user may wish that the autonomous mobile device is able to accurately recognize functional zones in a map of the work zone, such as a living room, a bedroom, a kitchen, a hallway, etc., and display the functional zones to the user on a human-machine user interface (UI), such that the user may select from the displayed functional zones a specific or multiple rooms to instruct the autonomous mobile device to execute specific tasks. This may require the autonomous mobile device to be able to smartly, accurately identify various functional zones in the map of the work zone.

In existing technology, there are some methods that can be used for the zone division of the map of the work zone. But due to the efficiency of the zone dividing method, there may be over-division issues associated with the divided zone, i.e., scopes that should belong to a same zone may be divided into two or more zones, causing a low accuracy in the map zone division.

### CONTENT OF INVENTION

The present disclosure provides a map zone fusing method, an apparatus, an autonomous mobile device and a storage medium. The fusion of the divided zones is based on zone features, which increases the accuracy of map zone division.

According to a first aspect, the present disclosure provides a map zone fusing method, including:
obtaining a label map of a target zone, the label map including a plurality of candidate rooms;
obtaining crossing borders between the candidate rooms;
determining an adjacency relationship between the candidate rooms based on the crossing borders, to determine adjacent rooms;
fusing the adjacent rooms when the adjacent rooms satisfy a fusing condition.

Optionally, obtaining the crossing borders between the candidate rooms includes: obtaining crossing border lengths of the crossing borders between the candidate rooms;
Fusing the adjacent rooms when the adjacent rooms satisfy a fusing condition, includes:
determining whether a crossing border length of a crossing border is greater than a first crossing border threshold value or smaller than a second crossing border threshold value; when the crossing border length is greater than the first crossing border threshold value or smaller than the second crossing border threshold value, fusing two adjacent rooms that are connected by the crossing border.

Optionally, obtaining the crossing borders between the candidate rooms includes: obtaining crossing border lengths of the crossing borders between the candidate rooms;

Fusing the adjacent rooms when the adjacent rooms satisfy a fusing condition, includes:
expanding a crossing border toward a first adjacent room and a second adjacent room located at two sides of the crossing border for a same depth, to obtain a first expanded zone and a second expanded zone;
obtaining an area of a first overlapping zone between the first expanded zone and the first adjacent room, and an area of a second overlapping zone between the second expanded zone and the second adjacent room, respectively calculating a first ratio between the area of the first overlapping zone and the area of the first adjacent room, and a second ratio between the area of the second overlapping zone and the area of the second adjacent room;
fusing the adjacent rooms when the first ratio is greater than an area ratio threshold value and/or the second ratio is greater than the area ratio threshold value.

Optionally, the method also includes:
obtaining an area of a candidate room;
for each candidate room, when the area of the candidate room is smaller than an area threshold value, determining the candidate room as a room-to-be-fused;
determining a target room from adjacent rooms of the room-to-be-fused;
fusing the room-to-be-fused with the target room.

Optionally, determining a target room from adjacent rooms of the room-to-be-fused, includes:
when the room-to-be-fused has at least two adjacent rooms, obtaining crossing border lengths of crossing borders between the room-to-be-fused and each of the adjacent rooms, setting an adjacent room corresponding to a maximum crossing border length as a target room.

Optionally, determining a target room from adjacent rooms of the room-to-be-fused, includes:
when the room-to-be-fused has at least two adjacent rooms, obtaining areas of the adjacent rooms of the room-to-be-fused, setting an adjacent room having a minimum area as a target room.

Optionally, determining a target room from adjacent rooms of the room-to-be-fused, includes:
when the room-to-be-fused has at least two adjacent rooms, obtaining crossing border lengths of crossing borders between the room-to-be-fused and each of the adjacent rooms, among the crossing border lengths of the adjacent rooms, when at least two crossing border lengths are the same and both are the maximum, setting an adjacent room having a minimum area between adjacent rooms corresponding to the two maximum crossing border lengths as the target room.

According to a second aspect, the present disclosure provides a map zone fusing apparatus, including:
an obtaining module, configured to obtain a label map of a target zone, the label map including a plurality of candidate rooms; obtaining crossing borders between the candidate rooms;
an adjacent room determining module, configured to determine an adjacency relationship between the candidate rooms based on the crossing borders, to determine adjacent rooms;
a fusing module, configured to determine whether the adjacent rooms satisfy a fusing condition, and when the adjacent rooms satisfy the fusion condition, fusing the adjacent rooms.

Optionally, when the obtaining module obtains the crossing borders between the candidate rooms, the obtaining module is specifically configured to: obtain crossing border lengths of the crossing borders between the candidate rooms;
The fusing module is specifically configured to: determine whether a crossing border length of a crossing border is greater than a first crossing border threshold value or smaller than a second crossing border threshold value; when the crossing border length is greater than the first crossing border threshold value or smaller than the second crossing border threshold value, fuse two adjacent rooms connected by the crossing border.

Optionally, when the obtaining module obtains the crossing borders between the candidate rooms, the obtaining module is specifically configured to: obtain crossing border lengths of the crossing borders between the candidate rooms;
The fusing module is specifically configured to:
expand a crossing border toward a first adjacent room and a second adjacent room located at two sides of the crossing border for a same depth, to obtain a first expanded zone and a second expanded zone;
obtain an area of a first overlapping zone between the first expanded zone and the first adjacent room, and an area of a second overlapping zone between the second expanded zone and the second adjacent room, respectively calculate a first ratio between the area of the first overlapping zone and the area of the first adjacent room, a second ratio between the area of the second overlapping zone and the area of the second adjacent room;
fuse the adjacent rooms when the first ratio is greater than an area ratio threshold value and/or the second ratio is greater than the area ratio threshold value.

Optionally, the obtaining module is also configured to: obtain areas of the candidate rooms;
The apparatus also includes:
a room-to-be-fused determining module, configured to, for each candidate room, when an area of the candidate room is smaller than an area threshold value, determine the candidate room as a room-to-be-fused.
a target room determining module, configured to determine a target room from adjacent rooms of the room-to-be-fused;
the fusing module, configured to fuse the room-to-be-fused with the target room.

Optionally, the target room determining module is specifically configured to:
when the room-to-be-fused has at least two adjacent rooms, obtain crossing border lengths of crossing borders between the room-to-be-fused and each of the adjacent rooms, set an adjacent room corresponding to a maximum crossing border length as the target room.

Optionally, the target room determining module is specifically configured to:
when the room-to-be-fused has at least two adjacent rooms, obtain areas of the adjacent rooms of the room-to-be-fused, set an adjacent room having a minimum area as the target room.

Optionally, the target room determining module is specifically configured to:
when the room-to-be-fused has at least two adjacent rooms, obtain crossing border lengths of crossing borders between the room-to-be-fused and each of the adjacent rooms, among the crossing border lengths of the adjacent rooms, when at least two crossing border lengths are the same and both are the maximum, set an adjacent room having a minimum area between adjacent rooms corresponding to the two maximum crossing border lengths as the target room.

According to a third aspect, the present disclosure provides an autonomous mobile device, including: a storage device, configured to store program instructions; a processor, configured to retrieve and execute the program instructions stored in the storage device, to perform the method of the first aspect.

According to a fourth aspect, the present disclosure provides a computer-readable storage medium, the storage medium stores a computer program. When the computer program is executed by a processor, the method of the first aspect is performed.

According to a fifth aspect, the present disclosure provides a computer program product, including a computer program. When the computer program is executed by a processor, the method of the first aspect is performed.

The present disclosure provides a map zone fusing method, an apparatus, an autonomous mobile device and a storage medium. The method includes: obtaining a label map of a target zone, the label map including a plurality of candidate rooms; obtaining crossing borders between the candidate rooms; determining an adjacency relationship between the candidate rooms based on the crossing borders, to determine adjacent rooms; fusing the adjacent rooms when the adjacent rooms satisfy a fusing condition. In the technical solutions of the present disclosure, through determining the adjacency relationship between the adjacent rooms in the label map, adjacent rooms satisfying the fusing condition are fused. Fusion of the post-division map zones may be performed based on zone features, such that the post-zone-division map better and more accurately matches the division of the functional zones in the actual target zone, increasing the accuracy of the map zone division.

### BRIEF DESCRIPTIONS OF THE ACCOMPANYING DRAWINGS

To explain more clearly the technical solutions of the present disclosure or of the existing technologies, the accompanying drawings that are used in the description of the embodiments or the existing technologies are briefly introduced. Obviously, the accompanying drawings described below show some embodiments of the present disclosure. For a person having ordinary skills in the art, other accompanying drawings may be obtained based on these accompanying drawings without expending creative effort.
FIG. 1 is a schematic illustration of an application scene according to the present disclosure;
FIG. 2 is a flowchart showing a map zone fusing method according to an embodiment of the present disclosure;
FIG. 3 is a schematic illustration of a crossing border between candidate rooms according to an embodiment of the present disclosure;
FIG. 4 is a schematic illustration of an expansion method according to an embodiment of the present disclosure;
FIG. 5 is a schematic illustration of another expansion method according to an embodiment of the present disclosure;
FIG. 6 is a flowchart illustrating another map zone fusing method according to an embodiment of the present disclosure;
FIG. 7 is a schematic illustration of a structure of a map zone fusing apparatus according to an embodiment of the present disclosure;
FIG. 8 is a schematic illustration of a structure of an electronic device according to an embodiment of the present disclosure.

### DETAILED EMBODIMENTS

In order to make the objective of the present disclosure, the technical solutions and advantages clearer, next, the technical solutions of the present disclosure will be clearly and comprehensively described with reference to the accompanying drawings of the present disclosure. Obviously, the described embodiments are some embodiments of the present disclosure, and are not all of the embodiments. Based on the embodiments of the present disclosure, a person having ordinary skills in the art can obtain all other embodiments without expending creative effort, which all belong to the scope of protection of the present disclosure.

Based on different types of tasks and work zones, autonomous mobile devices may need to execute tasks in some specified zones in a work zone. For example, cleaning robots may execute the cleaning tasks in a living room zone. This may require the autonomous mobile device to be able to automatically perform zone division to a work zone.

However, when seeking accuracy of the zone division, oftentimes the issue of over-division may occur, such that a space that should belong to a same zone may be divided into multiple zones. In the present disclosure, the crossing border refers to a connecting portion between two interconnected candidate rooms. In a post-division map, the crossing border between two interconnected candidate rooms may correspond to a "door" between two actual rooms in an actual target zone, or may be a relatively narrower portion between two relatively wider portions of a same room, rather than an actual door. The objective of the fusion is to combine two candidate rooms in the map located at two sides of the crossing border, which may not correspond to a "door" in a functional zone of the actual target zone, into a single candidate room, such that the post-division map better and more accurately matches the division of the functional zones in the actual target zone.

The present disclosure provides a map zone fusing method, an apparatus, an autonomous mobile device and a storage medium. The fusion of the post-division map zones is based on zone features, which increases the efficiency and accuracy of map zone division.

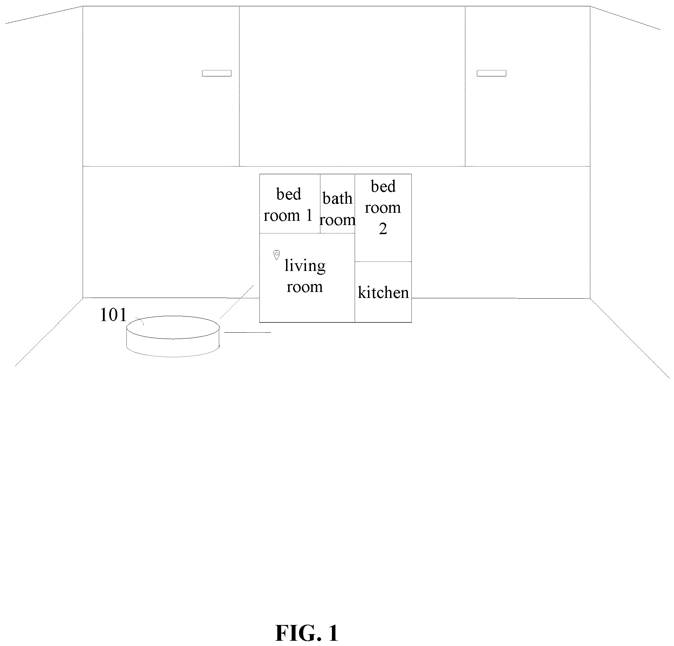

FIG. 1 is a schematic illustration of an application scene provided by the present disclosure. The autonomous mobile device of the present embodiment is a cleaning robot 101, as shown in FIG. 1, the cleaning robot 101 may execute the cleaning tasks in an indoor work zone. The cleaning robot 101 may perform automatic zone division based on the current indoor map, determine multiple candidate rooms included in the indoor space, and obtain a label map. Then, the map zone fusing method of the present disclosure may be performed based on the label map, to fuse the candidate rooms, to obtain the final functional zone map (the map shown in FIG. 1). A user may send cleaning task instructions to the autonomous mobile device from a UI. The cleaning task instructions may include executing cleaning tasks within a selected functional zone (e.g., a living room zone) that is selected on the functional zone map. The cleaning instructions may also include setting, in the selected zone, the work mode corresponding to the selected zone, such as a quiet mode, a high power mode, a repeat cleaning mode, etc. The process of map zone fusion is a subsequent step performed on the map of the target zone after the automatic zone division. The detailed implementations can refer to the following embodiments.

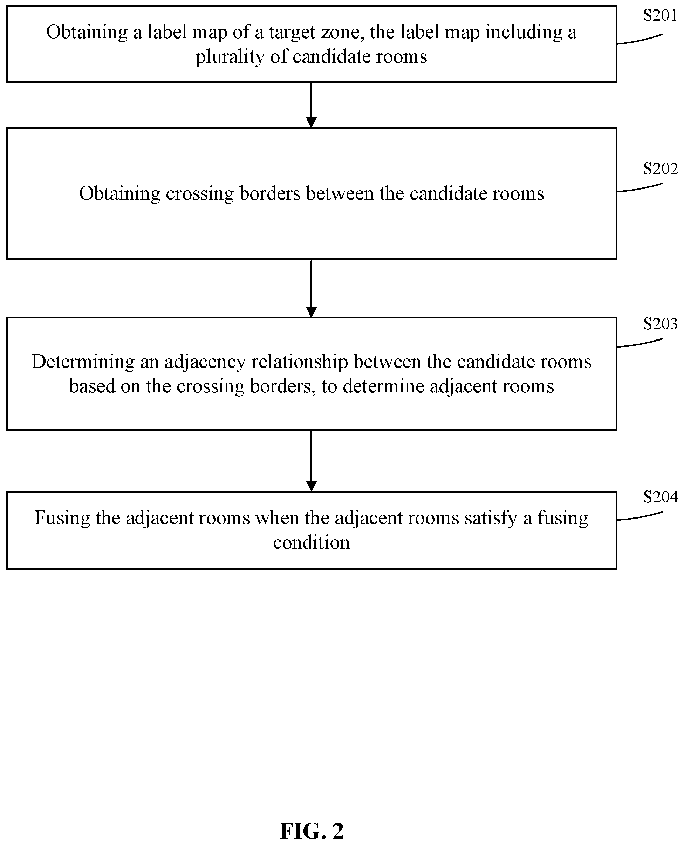

FIG. 2 is a flowchart illustrating a map zone fusing method according to an embodiment of the present disclosure. The execution body of the method of the present embodiment may be an autonomous mobile device, or a management system of the autonomous mobile device. As shown in FIG. 2, the method of the present embodiment may include:
S201, obtaining a label map of a target zone, the label map including a plurality of candidate rooms.

The label map is a map obtained after a pre-processing is performed, which is after the zone division of the map of the target zone. The label map in the present disclosure is also simply referred to as a "map." Because the zone division of the map of the target zone has been performed, the label map includes multiple divided zones. These divided zones are referred to as candidate rooms. Automatic zone division by the autonomous mobile device based on the map of the current indoor target zone may be based on an automatic zone division technology in existing technologies, for example, by recognizing doors between each indoor room as a mark for room division, or by recognizing a zone enclosed by walls between each room as a zone of a room. The present disclosure does not limit the automatic zone dividing method for the map of the target zone. A candidate room includes at least one traversable zone. The traversable zone refers to a zone in the label map that corresponds to a zone in the target zone that is reachable by the autonomous mobile device. Illustratively, if the label map is a pixel map, traversable zones and non-traversable zones may be marked on the pixel map using internal points having different pixel values. For example, the pixel value of an internal point within a traversable zone may be marked with 1, and the pixel value of an internal point within a non-traversable zone may be marked with -1.

S202, obtaining crossing borders between candidate rooms.

In the present disclosure, if a partial edge of a candidate room crosses or overlaps with a non-traversable zone, the partial edge may be referred to as a boundary of the candidate room. If a partial edge of a candidate room crosses with a traversable zone, the partial edge may be referred to as a crossing border of the candidate room; in some embodiments, the traversable zone in the label map belongs to the candidate room. In other words, there may be no separate traversable zone that is independent of a candidate room. Then, if a partial edge of a candidate room crosses with the traversable zone, the partial edge of the candidate room necessarily crosses with edges of other candidate rooms. The traversable zone at the crossing portion is the crossing border between the edge of the candidate room and an adjacent room of the candidate room (i.e., the other candidate room that crosses with the partial edge of the candidate room, as described above).

A boundary of a candidate room may also be referred to as a reachable boundary. For example, in the above example in which the map of the target zone is a pixel map, the crossing limit between a traversable zone having pixel values marked using 1 and a non-traversable zone having pixel values marked using -1 is a reachable boundary within the target zone for the autonomous mobile device. When the autonomous mobile device moves along an edge of a candidate room, the autonomous mobile device may not pass the boundary of the room (because the boundary is a crossing portion between the candidate room and the non-traversable zone), but may pass a crossing border between the candidate room and its adjacent room to enter the adjacent room (because a crossing border is a traversable zone, in the above embodiment, the crossing border is a crossing portion between the candidate room and another candidate room). That is, the crossing border is a connecting zone between two adjacent candidate rooms. Corresponding to the actual room structure, it can be understood as, the crossing border is a non-traversable structure such as a wall of a room or an obstacle standing against the wall (e.g., furniture standing against the wall, such as a floor cabinet, a sofa, a TV stand, a refrigerator, an air conditioner, a bed, etc.). The crossing border may be a "door" between two actual rooms, or a traversable location such as a relatively narrower portion between two relatively wider portions of a same room.

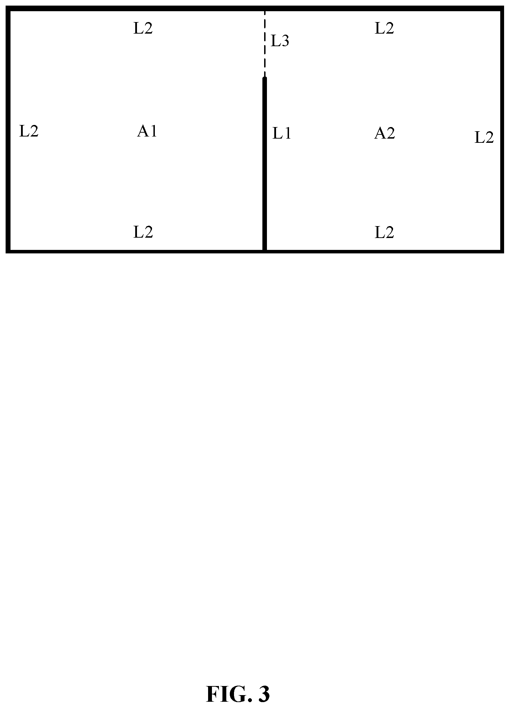

As shown in FIG. 3, a label map includes a candidate room A1 and a candidate room A2, and the candidate rooms A1 and A2 are adjacent and connected. The black lines L1, L2 represent non-traversable zones. The partial edges of the candidate rooms A1, A2 that respectively cross with the non-traversable zone L1 are the boundaries of A1 and A2, respectively. The partial edges of the candidate rooms A1, A2 that respectively cross with the non-traversable zone L2 are also the boundaries of A1 and A2, respectively. And the partial edges of the candidate rooms A1 and the candidate room A2 that cross with a traversable zone L3 are boundaries of the candidate room A1 and the candidate room A2, i.e., L3 is the crossing border of A1 and A2. Although L1 is shown as a slender portion in FIG. 3, it can still be a zone rather than a line, and L1 is a non-traversable zone. Therefore, the partial edge of the candidate room A1 that crosses with the non-traversable zone L1 is a boundary. The partial edge of the candidate room A2 that crosses with L1 is also a boundary. Corresponding to an actual target zone, when a wall or furniture standing against the wall separates two actual rooms, typically, the corresponding location of the wall or the furniture standing against the wall in the map (i.e., boundary) is not a line, but is a two-dimensional shape having a certain width. For example, the boundary L1 may be viewed as a rectangle, the inside of which is a non-traversable zone (e.g., the pixel points or pixel values may be marked using -1). In an actual space, the boundary L1 actually separates the candidate rooms A1, A2 located at two sides of L1. Therefore, the candidate rooms A1, A2 located at two sides of the boundary L1 should not be fused.

In some embodiments, there may be a clear crossing border between each candidate room in the label map, then the crossing border may be directly obtained. For example, the crossing border between each candidate room may have already been labeled using a certain mark.

A crossing border may be generated during a zone division process. Next, the crossing border will be explained based on a zone dividing method.

A map of a target zone is obtained; the map including reachable boundaries in the target zone for the autonomous mobile device. The points in the map of the target zone may be separated into two categories: traversable locations of the autonomous mobile device (also referred to as internal points) and unreachable locations of the autonomous mobile device (for example, locations of obstacles and obstacle zones in a closed curve formed by sequentially connecting adjacent obstacle locations, referred to as unreachable points).

For a plurality of internal points within the reachable boundaries in the map, based on the distances from an internal point to each of the reachable boundaries, a representative distance value of the internal point may be determined. The plurality of internal points may be selected from internal points of a reachable zone portion in the map. A distance from an internal point to each of the reachable boundaries, refers to a distance from the internal point to the reachable boundary in the map of the target zone; which may be distances from the internal point to each point on each of the reachable boundaries (which will be multiple distances); or which may be a distance from the internal point to a point on each of the reachable boundaries that satisfies a predetermined condition. For example, a line passing through the internal point and perpendicular to a reachable boundary may cross with the reachable boundary at a crossing point. The length of a perpendicular line segment between the internal point and the crossing point on the line may be the distance from the internal point to the reachable boundary. For the convenience of description, the distance from the internal point to a certain reachable boundary obtained through this method may be referred to as a perpendicular distance. At this moment, the perpendicular distance is a single distance, i.e., the number of distances from the internal point to the reachable boundary may be one, i.e., the perpendicular distance. However, typically, the number of reachable boundaries of an internal point is more than one. Therefore, for an internal point, there are typically multiple distances from the internal point to the reachable boundaries. In the above example of perpendicular distance, the number of the perpendicular distances is the same as the number of reachable boundaries.

The representative distance value of each internal point may be determined based on the distances from each internal point to each of the reachable boundaries. Illustratively, the representative distance value may be set as a shortest distance of the distances from the internal point to each of the reachable boundaries. In a closed planar space, the internal points typically show the following characteristics, i.e., the perpendicular distances from the point located closest to the center location to each of the reachable boundaries are relatively uniform, manifested as the maximum value of the perpendicular distances being relatively small and the minimum value of the perpendicular distances being relatively large. The closer the point is to the reachable boundaries in an outward direction from the center, the larger the differences between the distances from the point to each of the reachable boundaries, manifested as the maximum value of the perpendicular distances getting larger and larger, and the minimum value getting smaller and smaller.

Based on the representative distance values of a plurality of internal points within the reachable boundaries in the map, a main structure of each map candidate room may be determined. Because a location of an internal point and its representative distance value illustrate the relative location relationship between the internal point and each of the reachable boundaries, multiple representative internal points may be selected based on the representative distance values of the internal points, to form a main structure of a map candidate room. The main structure of the map candidate room can approximately illustrate the rough shape and location of each zone division in the map.

The main structure of the map candidate room may be expanded, to obtain each map room. A map room refers to a map zone obtained when outward expansion of the main structure of the map candidate room cannot be further performed. Specifically, the main structure of each map candidate room may be expanded. A condition that stops the expansion certainly is that the boundary of the expanded main structure of the map candidate room (also referred to as an expanded main structure) contacts an expanded main structure of another map candidate room, to form a main structure crossing border, or the boundary of the expanded main structure contacts the reachable boundaries of the map, to obtain a main structure boundary.

The above is a method for determining and obtaining crossing borders between candidate rooms.

In other embodiments, there may not be an explicit crossing border between candidate rooms in the map. Different candidate rooms may be marked with different marks. For example, pixels of different candidate rooms may be filled with different pixel values or different symbols (different characters or different numbers). The crossing border between candidate rooms may be obtained through traversing each pixel point in the label map.

Specifically, when traversing each pixel point in the label map, if a mark of a certain pixel point is different from a mark of its adjacent pixel point, and the pixel point and its adjacent pixel point correspond to marks of two different candidate rooms, respectively, then it may be determined that the pixel point and/or its adjacent pixel point form the crossing border between the two candidate rooms. For example, if a pixel point is a pixel point on an edge of a candidate room A1 (assuming that this pixel point is marked with 1), and its adjacent pixel point is a pixel point of a candidate room A2 (assuming that this pixel point is marked with 2), then it may be determined that the pixel point and its adjacent pixel point are the pixel points on the crossing border between the candidate room A1 and the candidate room A2, thereby obtaining the crossing border of the candidate rooms A1 and A2; for the purpose of simplicity, the above pixel point or its adjacent pixel point may represent the crossing border between the candidate room A1 and the candidate room A2. The above is another method for determining and obtaining the crossing borders between the candidate rooms.

In other embodiments, the crossing borders between the candidate rooms may be obtained through obtaining the location of each of the candidate room. Specifically, through the absolute coordinate location of the edge of each candidate room in the label map, the coordinates of a crossing border between two candidate rooms may be determined. Through this step, the location candidate corresponding to the crossing border between any two candidate rooms may be obtained, and/or information about two candidate rooms that form a crossing border and correspond to this crossing border may be obtained. The above example is another method for determining and obtaining the crossing borders between candidate rooms. A person having ordinary skills in the art can appreciate that, the present disclosure does not limit the method for obtaining the crossing borders between the candidate rooms.
S203, determining an adjacency relationship between the candidate rooms based on the crossing borders, to determine adjacent rooms.

After determining the crossing borders, the adjacency relationship between candidate rooms in the label map may be determined, thereby determining the adjacent rooms.

First, the adjacent rooms belong to candidate rooms; second, two candidate rooms that are adj acent rooms are connected through a common crossing border. In other words, when a crossing border and the two candidate rooms connected by the crossing border are known, the candidate rooms located at two sides of the crossing border may be determined as adjacent rooms.

It should be noted that in the present disclosure, when the term "adjacent rooms" is used alone, it refers to two candidate rooms that have an adjacency relationship; when the phrase "an adjacent room of a certain room" is used, it refers to at least one room that is adjacent to this "certain room."

S204, fusing the adjacent rooms when the adjacent rooms satisfy a fusing condition.

The adjacent rooms that satisfy the fusing condition are fused, such that the adjacent rooms are combined into a single room.

For example, there is a crossing border L3 between the candidate room A1 and the candidate room A2, if the candidate room A1 satisfies the fusing condition, and/or, the candidate room A2 satisfies the fusing condition, then the candidate room A1 and the candidate room A2 may be fused into a new candidate room A. That is, the crossing border L3 is eliminated, and the candidate rooms A1 and A2 are combined into the new candidate room A.

The present disclosure provides a map zone fusing method, including: obtaining a label map of a target zone, the label map including a plurality of candidate rooms; obtaining crossing borders between the candidate rooms; determining an adjacency relationship between the candidate rooms based on the crossing borders, to determine adjacent rooms; fusing the adjacent rooms when the adjacent rooms satisfy a fusing condition. In the technical solution of the present disclosure, by determining the adjacency relationship between the candidate rooms in the label map, the adjacent rooms satisfying the fusing condition are fused, thereby fusing rooms that may be mistakenly divided, correcting the zone division result. Two candidate rooms located at two sides of a crossing border in the map that does not correspond to a "door" in an actual functional zone are combined into a single candidate room, such that the post-zone-division map better and more accurately matches the division of the functional zones in the actual target zone.

In some embodiments, obtaining the crossing borders between the candidate rooms includes: obtaining crossing border lengths of the crossing borders between the candidate rooms; fusing the adjacent rooms when the adjacent rooms satisfy the fusing condition includes: determining whether a crossing border length of a crossing border is greater than a first crossing border threshold value or smaller than a second crossing border threshold value; fusing the two adjacent rooms connected by the crossing border when the crossing border length of the crossing border is greater than the first crossing border threshold value or smaller than the second crossing border threshold value.

Specifically, when obtaining the crossing borders between the candidate rooms, the crossing border lengths of the crossing borders may be obtained, and a determination may be made as to whether the adjacent rooms corresponding to a crossing border satisfies the fusing condition based on the crossing border length of the crossing border.

For the above-described method for determining the crossing borders, a crossing border length of a crossing border may be determined based on the number of pixel points that form the crossing border. Because the map is an equal-ratio scaled-down graph of an actual target zone, each pixel corresponds to a certain size of the actual target zone. The specific length in the actual space corresponding to the crossing border in the map may be calculated based on the number of pixel points at the crossing border and the magnifying ratio of the map.

If two candidate rooms may be referred to as two independent rooms, then the width of the connecting zone, i.e., the crossing border length of the crossing border should satisfy a certain condition. For example, according to the rules for the door width under China's national standard, a living structure home-separating door is 0.9~1m, the room-separating door is 0.8~ 0.9m, a kitchen door is about 0.8m, a bathroom door is 0.7~0.8m; for the door width in a public building, a single door is 1m, a double-door is 1.2~1.8m. Therefore, the crossing border length of the crossing border may be set as smaller than or equal to a first crossing border threshold value of 2 meters. If this condition is not satisfied, i.e., if the crossing border length of the crossing border is greater than the first crossing border threshold value of 2 meters, then highly likely it is the relatively narrower portion between two relatively wider portions in an actual room, rather than a "door" that separates actual rooms. Therefore, fusing can be performed. The first crossing border threshold value may be set as 2 meters or other value. In addition, according to the door size of the national standard, an actual door should be greater than 0.5 meters, then the second crossing border threshold value may be set as 0.5 meters. If this condition is not satisfied, i.e., if the crossing border length of the crossing border is smaller than the second crossing border threshold value of 0.5 meters, the two adjacent rooms connected with the crossing border are fused. The second crossing border threshold value may be set as 0.5 meters or other values.

In other embodiments, fusing adjacent rooms when the adjacent rooms satisfy the fusing condition, includes: expanding the crossing border toward a first adjacent room and a second adjacent room located at two sides of the crossing border for a same depth, to obtain a first expanded zone and a second expanded zone; obtaining an area of a first overlapping zone between the first expanded zone and the first adjacent room, and an area of a second overlapping zone between the second expanded zone and the second adjacent room, respectively calculating a first ratio between the area of the first overlapping zone and the area of the first adjacent room, and a second ratio between the area of the second overlapping zone and the area of the second adjacent room; fusing the adjacent rooms when the first ratio is greater than an area ratio threshold value and/or the second ratio is greater than the area ratio threshold value.

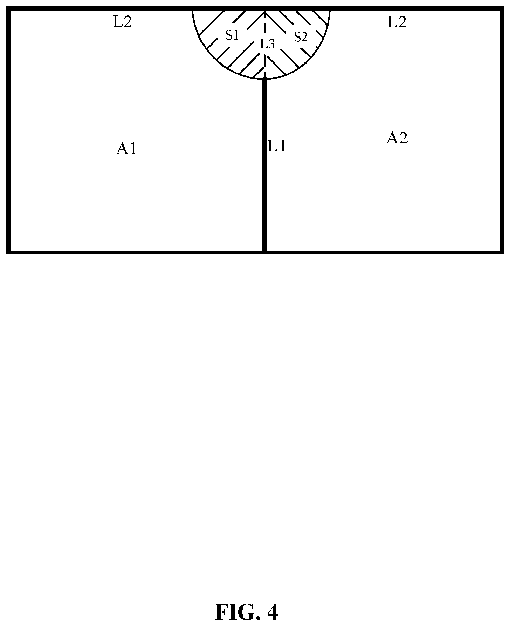

The method for determining the crossing border lengths of the crossing borders can refer to the above descriptions. If a candidate room in the map corresponds to an independent room in the actual target zone, then the area of the candidate room would satisfy a reasonable condition of the independent room. For example, the room has a sufficiently large area to allow the room door to open and close freely. In other words, the area of the actual independent room is at least greater than a quarter of an area of a circle having a radius that is the width of the door of the room. As shown in FIG. 4, an area s1 of a shaded zone S1 is the minimum area of a candidate room A1 that allows the room door to open and close freely, an area s2 of a shaded zone S2 is the minimum area of a candidate room A2 that allows the room door to open and close freely.

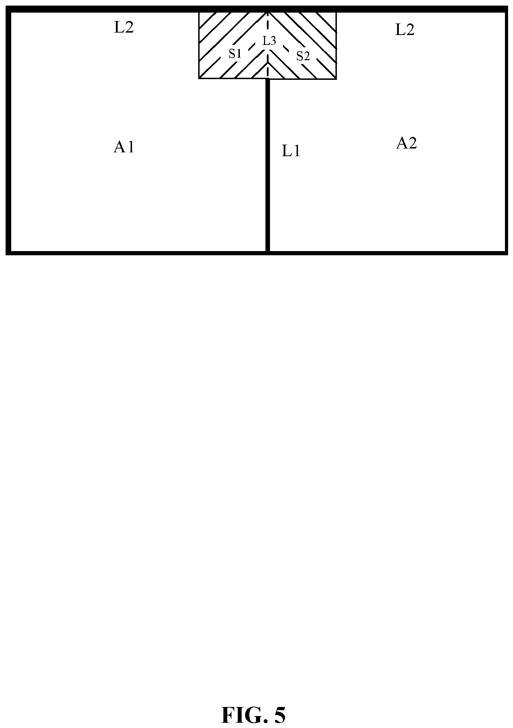

The present disclosure recognizes that, if two adjacent rooms in the map correspond to two actual adjacent independent rooms, then a room door should be installed at the location of the crossing border between the two independent rooms, and then the area of the room door should allow the room door to be opened. A threshold value may be set based on the area of the room door to determine whether the crossing border is a room door in an actual space. Illustratively, the crossing border may be expanded respectively toward the two adjacent rooms located on two sides of crossing border for a same depth. In a specific expansion, a circular sector shaped expansion as shown in FIG. 4 may be performed using a crossing border L3 as a radius. Then, the area s1 of a first expanded zone S 1 expanded toward the first adjacent room A1 is a quarter of an area of a circle having a radius of the width of the door of the room. Because the expansion depth from the crossing border L3 toward the first adjacent room A1 is the same as the expansion depth toward the second adjacent room A2, the area s2 of a second expanded zone S2 expanded from the crossing border L3 toward the second adjacent room A2 is also a quarter of the area of the circle having the radius of the width of the door of the room. The expansion method may also be, using the length of the crossing border L3 as the expansion depth, expanding toward the two adjacent rooms A1 and A2 located at two sides of the crossing border for the same depth. As shown in FIG. 5, the areas of the first expanded zone S 1 and the second expanded zone S2 from the crossing border L3 toward the two adjacent rooms A1 and A2 located at two sides of the crossing border L3 are s1 and s2 respectively. The expansion areas s1 and s2 are an area swept through when opening the room door (i.e., the expansion depth is the width of the room door, then the expansion area is: the length of the crossing border × the expansion depth = the width of the room door × the width of the room door = square of the width of the room door). Clearly, s1=s2. The present disclosure does not limit the expansion depth and the expansion area. Illustratively, the expansion may be performed using any shape that uses the crossing border as an edge toward the two adjacent rooms located at two sides of the crossing border. If the depth is n times of the crossing border L3 (n ≥ 1), then the area s1 of the first expanded zone and area s2 of the second expanded zone are both equal to n*l², where 1 is the length of the crossing border L3.

From the above-described embodiment, it can be seen that the expansion depth refers to "a length of expansion in a direction perpendicular to the crossing border, starting from a certain point on the crossing border into a candidate room located at a side of the crossing border," which is perpendicular to an extending direction of the crossing border.

For an actual reasonable independent room, the corresponding expansion depth is at least greater than the width of the door (e.g., the length of the crossing border) (the depth is at least 1 time of the length of the crossing border). For example, the depth may be any multiple between 1~2 times of the length of the crossing border, such as 1.5 times. As shown in FIG. 5, the respective products of the length 1 of the crossing border L3 with the depths of the crossing border expanding into the first adjacent room A1 and second adjacent room A2 are the area s1 of a first overlapping zone between the first expanded zone S1 and the first adjacent room A1 (in this embodiment, the first overlapping zone is the same as the first expanded zone S 1) and the area s2 of a second overlapping zone between the second expanded zone S2 and the second adjacent room A2 (in this embodiment, the second overlapping zone is the same as the second expanded zone S2), where s1=s2 and both are smaller than the actual areas of the corresponding adjacent rooms. Assuming that the areas of the candidate rooms A1, A2 are a1, a2, then a first ratio η1 is a ratio s1/a1 between the area s1 of the first overlapping zone S1 and the area a1 of the first adjacent room A1, a second ratio η2 is a ratio s2/a2 between the area s2 of the second overlapping zone S2 and the area a2 of the second adjacent room A2. If the first ratio η1 is greater than an area ratio threshold value η0 and/or the second ratio η2 is greater than the area ratio threshold value η0, then it indicates that the area of an adjacent room does not satisfy a reasonable range of actual independent rooms. Therefore, the adjacent room may be fused with the other adjacent room. In some embodiments, the overlapping zone between the expanded zone and an adjacent room may not necessarily be the expanded zone, which may also possibly be smaller than an expanded zone.

In some embodiments, the method also includes: obtaining areas of candidate rooms; for each candidate room, determining the candidate room as a room-to-be-fused when the area of the candidate room is smaller than an area threshold value; determining a target room from adjacent rooms of the room-to-be-fused; fusing the room-to-be-fused with the target room.

If a candidate room in the map corresponds to an independent room in the actual target zone, then the area of the candidate room would satisfy other conditions. If the area of the candidate room is overly small, then it cannot correspond to an independent room in the actual space, but is likely a portion that is mistakenly divided out from an actual independent room. This candidate room may be referred to as a room-to-be-fused. For example, typically, the area of an actual room is at least not less than 4 square meters. Therefore, if the area in the actual space that corresponds to the candidate room does not satisfy this area threshold value condition, the candidate room is likely not an independent room in the actual space, and the candidate room should be fused. From candidate rooms that are adjacent to the room-to-be-fused, a room to which the room-to-be-fused may belong to may be determined, and may be referred to as a target room. The room-to-be-fused and the target room may be fused into a single room.

Under some conditions, the room-to-be-fused has only one adjacent room, then this unique adjacent room is determined as the target room.

Under other conditions, the room-to-be-fused may include two or more than two adjacent rooms. An adjacent room may be selected from the two or more than two adjacent rooms as the target room, which may be fused with the room-to-be-fused.

A criterion for selecting the target room from the two or more than two adjacent rooms may be the area of the room and/or the crossing border length of the crossing border, etc. Next, the crossing border length of the crossing border is used as an example in the following embodiment.

In some embodiments, determining the target room from adjacent rooms of the room-to-be-fused, includes: when the room-to-be-fused has at least two adjacent rooms, obtaining crossing border lengths of crossing borders between the room-to-be-fused and each of the adjacent rooms, and setting an adjacent room corresponding to a maximum crossing border length as the target room.

In some embodiments, determining the target room from adjacent rooms of the room-to-be-fused, includes: when the room-to-be-fused has at least two adjacent rooms, obtaining areas of the adjacent rooms of the room-to-be-fused, setting an adjacent room having a minimum area as the target room.

In other embodiments, determining the target room from adjacent rooms of the room-to-be-fused, includes: when the room-to-be-fused has at least two adjacent rooms, obtaining crossing border lengths of crossing borders between the room-to-be-fused and each of the adjacent rooms, among the crossing border lengths of the adjacent rooms, when at least two crossing border lengths are the same and both are the maximum, setting an adjacent room having a minimum area between adjacent rooms corresponding to the two maximum crossing border lengths as the target room.

That is, if the room-to-be-fused has only one adjacent room, then this adjacent room is determined as the target room; alternatively, if the room-to-be-fused has two or more than two adjacent rooms, then an adjacent room having a crossing border with the room-to-be-fused that has a maximum crossing border length is determined as the target room; alternatively, if two or more than two adjacent rooms have crossing borders with the room-to-be-fused that have similar crossing border lengths, then an adjacent room having a minimum area is determined as the target room.

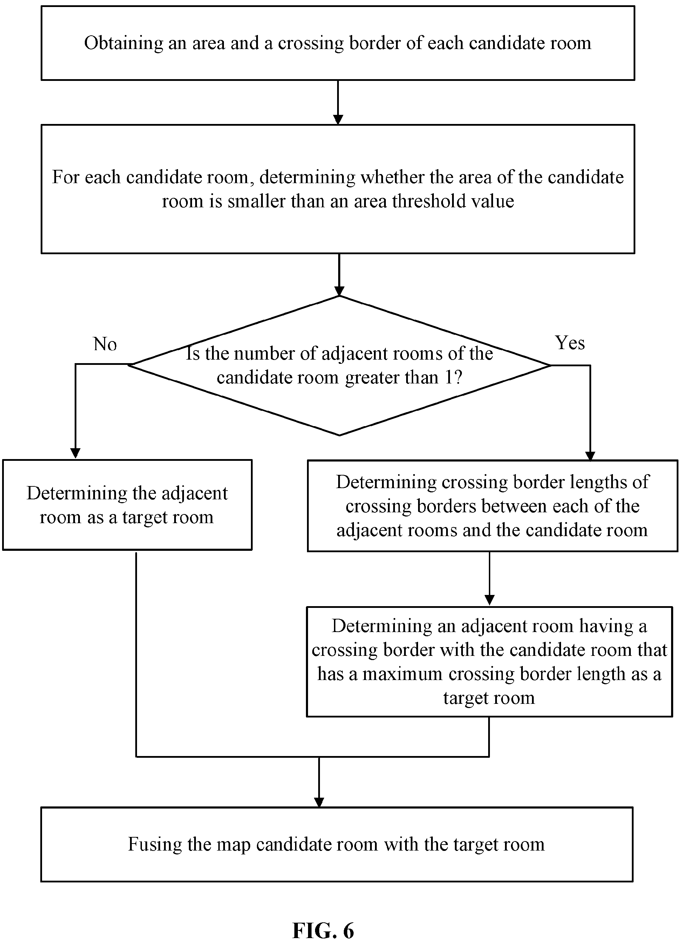

Referring to FIG. 6, it shows a flowchart illustrating a fusing method. First, an area and a crossing border of each of the candidate rooms are obtained; each of the candidate rooms is traversed, for each candidate room, a determination is made as to whether an area of the candidate room is smaller than an area threshold value; if the area is smaller than the area threshold value, then adjacent rooms of the candidate room are further determined based on the crossing border of the candidate room; a determination is made as to whether the number of adjacent rooms of the candidate room is greater than 1; if the number of adjacent rooms of the candidate room is not greater than 1, then determine the 1 adjacent room as the target room; if the number of the adjacent rooms of the candidate room is greater than 1, then crossing border lengths of crossing borders between each of the adjacent rooms and the candidate room are determined; an adjacent room having a crossing border with the candidate room that has a maximum crossing border length is determined as the target room; the candidate room and the target room are fused.

After executing the above-described fusing method, the map corresponding to the fusing result may be displayed at a terminal device of the user, for the convenient inquiry by the user. In the meantime, adjustment operations may be provided to the user. If the user believes that there is an error in the current zone division, the user may input adjustment instructions through the user interface of the terminal device, to further adjust the size, location of the room. In addition, the user may input label instructions through the user interface, to add a label to any room, for indicating the property of the room (e.g., bedroom, living room, kitchen, etc.). When creating tasks for the autonomous mobile device, specific tasks may be created based on the property of the room, for example, "cleaning the living room." By recognizing the instructions, the autonomous mobile device may determine that the task it is to execute is "cleaning," and the scope of the task execution is "living room."

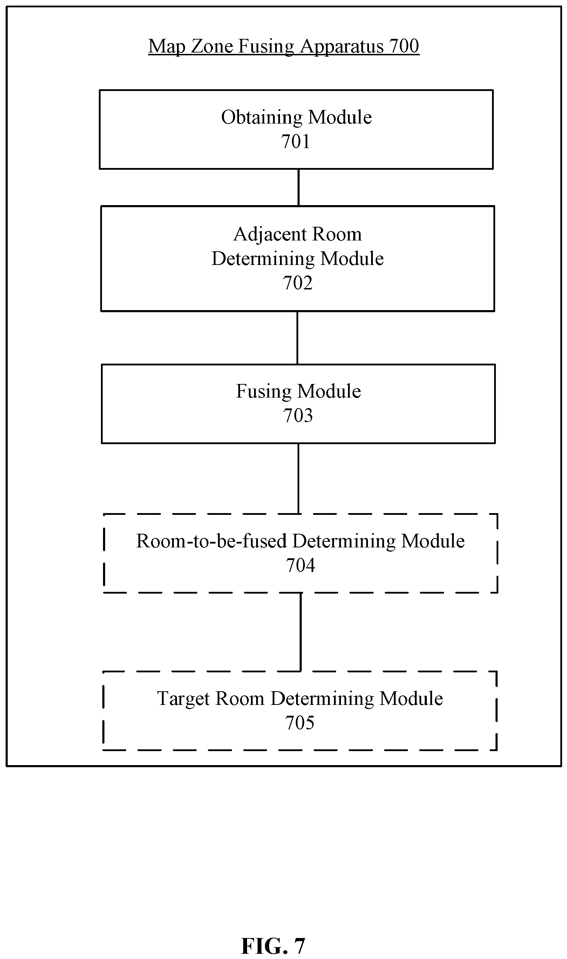

FIG. 7 is a schematic illustration of a structure of a map zone dividing apparatus according to an embodiment of the present disclosure. As shown in FIG. 7, a map zone fusing apparatus 700 of the present embodiment includes: an obtaining module 701, an adjacent room determining module 702, a fusing module 703.

The obtaining module 701, is configured to obtain a label map of a target zone, the label map including a plurality of candidate rooms; obtain crossing borders between the candidate rooms.

The adjacent room determining module 702, is configured to determine an adjacency relationship between the candidate rooms based on the crossing borders, to determine adjacent rooms;

The fusing module 703, is configured to determine whether the adjacent rooms satisfy a fusing condition, and when the adjacent rooms satisfy the fusing condition, fuse the adjacent rooms.

Optionally, when the obtaining module 701 obtains the crossing borders between the candidate rooms, it is specifically configured to: obtain crossing border lengths of the crossing borders between the candidate rooms;

The fusing module 702 is specifically configured to: determine whether a crossing border length of a crossing border is greater than a first crossing border threshold value or smaller than a second crossing border threshold value; when the crossing border length is greater than the first crossing border threshold value or smaller than the second crossing border threshold value, fuse two adjacent rooms connected by the crossing border.

Optionally, when the obtaining module 701 obtains the crossing borders between the candidate rooms, it is specifically configured to: obtain crossing border lengths of the crossing borders between the candidate rooms;
The fusing module 703 is specifically configured to:
expand a crossing border toward a first adjacent room and a second adjacent room located at two sides of the crossing border for a same depth, to obtain a first expanded zone and a second expanded zone;
obtain an area of a first overlapping zone between the first expanded zone and the first adjacent room, and an area of a second overlapping zone between the second expanded zone and the second adjacent room, respectively calculate a first ratio between the area of the first overlapping zone and the area of the first adjacent room, and a second ratio between the area of the second overlapping zone and the area of the second adjacent room;
fuse the adjacent rooms when the first ratio is greater than an area ratio threshold value and/or the second ratio is greater than the area ratio threshold value.

Optionally, the obtaining module 701 is also configured to: obtain areas of the candidate rooms.

The apparatus also includes:
a room-to-be-fused determining module 704, configured to, for each of the candidate rooms, when an area of the candidate room is smaller than an area threshold value, determine the candidate room as the room-to-be-fused;
a target room determining module 705, configured to determine a target room from adjacent rooms of the room-to-be-fused;
the fusing module 703, configured to fuse the room-to-be-fused with the target room.

Optionally, the target room determining module 705, is specifically configured to:
when the room-to-be-fused has at least two adjacent rooms, obtain crossing border lengths of crossing borders between the room-to-be-fused and each of the adjacent rooms, set an adjacent room corresponding to a maximum crossing border length as the target room.

Optionally, the target room determining module 705 is specifically configured to:
when the room-to-be-fused has at least two adjacent rooms, obtain areas of the adjacent rooms of the room-to-be-fused, set an adjacent room having a minimum area as the target room.

Optionally, the target room determining module 705 is specifically configured to:
when the room-to-be-fused has at least two adjacent rooms, obtain crossing border lengths of crossing borders between the room-to-be-fused and each of the adjacent rooms, among the crossing border lengths of the adjacent rooms, when at least two crossing border lengths are the same and both are the maximum, set an adjacent room having a minimum area between adjacent rooms corresponding to the two maximum crossing border lengths as the target room.

The apparatus of the present embodiment may be configured to execute the method of any of the above-described embodiments. The realization principle and the technical effects are similar, which are not repeated.

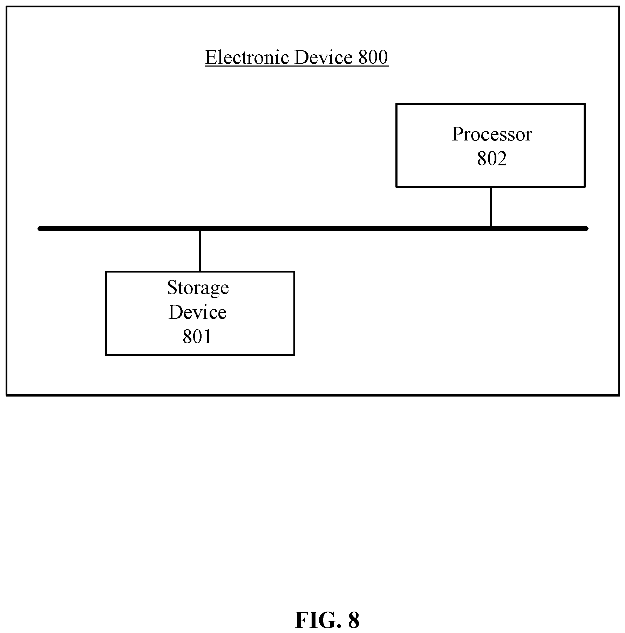

FIG. 8 is a schematic illustration of a structure of an electronic device according to an embodiment of the present disclosure. As shown in FIG. 8, an electronic device 800 of this embodiment may include: a storage device 801, a processor 802.

The storage device 801, is configured to store program instructions.

The processor 802, is configured to retrieve and execute the program instructions stored in the storage device 801, to execute the method of any of the above embodiments. The realization principle and the technical effects are similar, which are not repeated.

The electronic device of this embodiment may be an autonomous mobile device, or a management system of the autonomous mobile device.

The present disclosure also provides a computer-readable storage medium. The storage medium stores a computer program. When the computer program is executed by a processor, the method of any of the above embodiments may be executed.

The present disclosure also provides a computer program product, including a computer program. When the computer program is executed by a processor, the method of any of the above-described embodiments may be performed.

A person having ordinary skills in the art can appreciate: all or some steps of the method embodiments can be implemented through hardware related to computer instructions. The above-described program may be stored in a computer-readable storage medium. When the program is executed, the steps of the method of the above various embodiments can be executed. The above-described storage medium may include: various media that can store program codes, such as ROM, RAM, magnetic disks or optic disks.

Finally, it should be noted that: the above embodiments are only used to explain the technical solutions of the present disclosure, and are not to limit the present disclosure; although detailed explanations have been provided for the present disclosure with reference to the above various embodiments, a person having ordinary skills in the art should understand: the person having ordinary skills in the art can modify the technical solutions described in the above various embodiments, or carry out equivalent replacement to some or all technical features. These modifications or replacements do not render relevant technical solutions to deviate from the scope of the technical solutions of various embodiments of the present disclosure.

## Claims

1. A map zone fusing method, **characterized in that**, comprising:
obtaining a label map of a target zone, the label map including a plurality of candidate rooms;
obtaining crossing borders between the candidate rooms;
determining an adjacency relationship between the candidate rooms based on the crossing borders, to determine adjacent rooms;
fusing the adjacent rooms when the adjacent rooms satisfy a fusing condition.

2. The method according to claim 1, **characterized in that**,
obtaining the crossing borders between the candidate rooms includes: obtaining crossing border lengths of the crossing borders between the candidate rooms;
fusing the adjacent rooms when the adjacent rooms satisfy a fusing condition, includes:
determining whether a crossing border length of a crossing border is greater than a first crossing border threshold value or smaller than a second crossing border threshold value; when the crossing border length is greater than the first crossing border threshold value or smaller than the second crossing border threshold value, fusing two adjacent rooms connected by the crossing border.

3. The method according to claim 1, **characterized in that**,
obtaining the crossing borders between the candidate rooms includes: obtaining crossing border lengths of the crossing borders between the candidate rooms;
fusing the adjacent rooms when the adjacent rooms satisfy a fusing condition, includes:
expanding a crossing border toward a first adjacent room and a second adjacent room located at two sides of the crossing border for a same depth, to obtain a first expanded zone and a second expanded zone;
obtaining an area of a first overlapping zone between the first expanded zone and the first adjacent room, and an area of a second overlapping zone between the second expanded zone and the second adjacent room, respectively calculating a first ratio between the area of the first overlapping zone and the area of the first adjacent room, and a second ratio between the area of the second overlapping zone and the area of the second adjacent room;
fusing the adjacent rooms when the first ratio is greater than an area threshold value and/or the second ratio is greater than the area threshold value.

4. The method according to any of claims 1-3, **characterized in that**, also comprising:
obtaining areas of the candidate rooms;
for each of the candidate rooms, when an area of the candidate room is smaller than the area threshold value, determining the candidate room as a room-to-be-fused;
determining a target room from adjacent rooms of the room-to-be-fused;
fusing the room-to-be-fused with the target room.

5. The method according to claim 4, **characterized in that**, determining the target room from the adjacent rooms of the room-to-be-fused, comprises:
when the room-to-be-fused has at least two adjacent rooms, obtaining crossing border lengths of crossing borders between the room-to-be-fused and each of the adjacent rooms, setting an adjacent room corresponding to a maximum crossing border length as the target room.

6. The method according to claim 4, **characterized in that**, determining the target room from the adjacent rooms of the room-to-be-fused, comprises:
when the room-to-be-fused has at least two adjacent rooms, obtaining areas of the adjacent rooms of the room-to-be-fused, setting an adjacent room having a minimum area as the target room.

7. The method according to claim 4, **characterized in that**, determining the target room from the adjacent rooms of the room-to-be-fused, comprises:
when the room-to-be-fused has at least two adjacent rooms, obtaining crossing border lengths of crossing borders between the room-to-be-fused and each of the adjacent rooms, among the crossing border lengths of the adjacent rooms, when at least two crossing border lengths are the same and both are the maximum, setting an adjacent room having a minimum area between the adjacent rooms corresponding to the two maximum crossing border lengths as the target room.

8. A map zone fusing apparatus, **characterized in that**, comprising:
an obtaining module, configured to obtain a label map of a target zone, the label map including a plurality of candidate rooms; obtain crossing borders between the candidate rooms;
an adjacent room determining module, configured to determine an adjacency relationship between the candidate rooms based on the crossing borders, to determine adjacent rooms;
a fusing module, configured to determine whether the adjacent rooms satisfy a fusing condition, and when the adjacent rooms satisfy the fusing condition, fuse the adjacent rooms.

9. An autonomous mobile device, **characterized in that**, comprising:
a storage device, configured to store program instructions;
a processor, configured to retrieve and execute the program instructions stored in the storage device, to execute the method according to any of the claims 1-7.

10. A computer-readable storage medium, **characterized in that**, the storage medium stores a computer program, when the computer program is executed by a processor, the method according to any of the claims 1-7 is executed.

11. A computer program product, including a computer program, **characterized in that**, when the computer program is executed by a processor, the method according to any of the claims 1-7 is executed.
